# EUROPEAN PATENT APPLICATION

(11) **EP 1 990 985 A1**
(43) Date of publication of application: **12.11.2008**
(21) Application number: 07009257.2
(22) Date of filing: 08.05.2007
(51) Int. Cl.: H04M 7/00, H04M 7/12

(54) **Internet telephony call box device implemented with a single SLIC module**

(71) Applicant: F3 Inc., Science Park Hsinchu (TW)
(72) Inventor: Ouyang, Kenneth Wisheng, Taipei City 106 (TW); Huang, Yin-Kun, Zhubei City Hsinchu County 302 (TW); Chen, Kuan-Hsi, Hsinchu City 300 (TW); Hsu, Chih-Sheng, Kaohsiung City 802 (TW)
(74) Representative: Volpert, Marcus

(57) **Abstract**

An Internet telephony call box device implemented with a single SLIC module, which includes a first line connector, a second line connector, a switch module, a SLIC module and an LI module. A control module controls the switch module to switch a connection of the first line connector, the second line connector, the SLIC module and the LI module to thereby enable a conventional phone to make/answer a regular or VoIP call. The LI module includes a protection and rectification unit, a line status monitor unit, a ring detection unit and an off-hook emulation unit, which cooperate with the SLIC module to achieve the functions of the prior SLIC and DAA modules.

## Description

### BACKGROUND OF THE INVENTION

### 1. Field of the Invention

The invention relates to the technical field of Internet telephony and, more particularly, to an Internet telephony call box device implemented with a single subscriber line interface circuit (SLIC) module.

### 2. Description of Related Art

Upon the evolution of computer telephony integration (CTI) technologies, IP phones have increasingly replaced conventional phones as cheap and convenient communication tools. A typical IP phone generally uses a microphone and speaker to electrically connect to a personal computer for placing a VoIP call.

The microphone can transmit a voice and the speaker can reproduce a received voice, which is not convenient to a user who habitually uses a conventional phone to make a call. Accordingly, some handset-like IP phones are marketed. Such IP phones have to be purchased additionally and are not compatible with the conventional phone, which adds to the cost and is inconvenient in use. For example, a VoIP call is answered by an IP phone, and a regular call is answered by a conventional phone.

To overcome this, an Internet telephony call box device is connected with a computer, a public switched telephone network (PSTN) and a conventional phone, such that a conventional phone can make a VoIP or regular call.

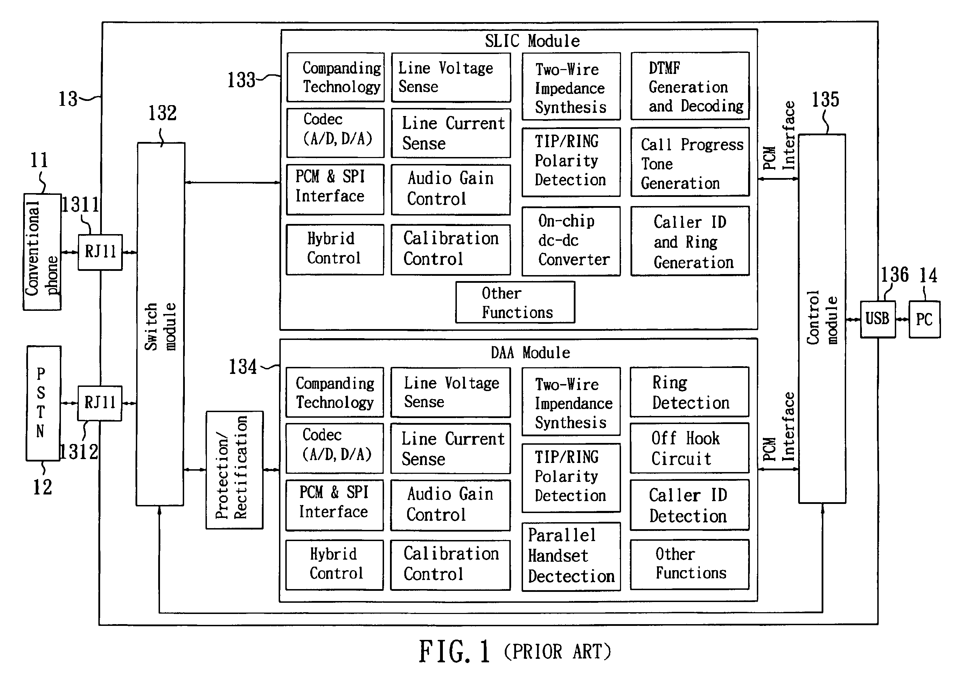

FIG. 1 is a block diagram of a typical Internet telephony call box device 13 applied to a conventional phone 11. In the figure, the typical system includes the conventional phone 11, the PSTN 12, the call box device 13 and a personal computer (PC) 14. The call box device 13 includes line connectors 1311, 1312, a switch module 131, a subscriber line interface circuit (SLIC) module 133, a direct access arrangement (DAA) module 134, a control module 135 and a universal serial bus (USB) connector 136.

The line connector 1311 is electrically connected to the conventional phone 11. The line connector 1312 is electrically connected to the PSTN 12. The USB connector 136 is electrically connected to the PC 14.

Generally, a SLIC module is implemented on the PSTN side of a call box device, which is referred to as a central office SLIC module, in order to provide a voltage to a conventional phone. A DAA module corresponding to the central office SLIC is implemented on the conventional phone side of the call box device. Accordingly, a user on the Internet can use a PC to emulate a regular call through the DAA module, and the conventional phone can answer a VoIP call through the SLIC module.

For enabling the conventional phone 11 to answer a VoIP call coming from the Internet, the SLIC module 133 is implemented in the call box device 13. The DAA module 134 is implemented with respect to the SLIC module 133.

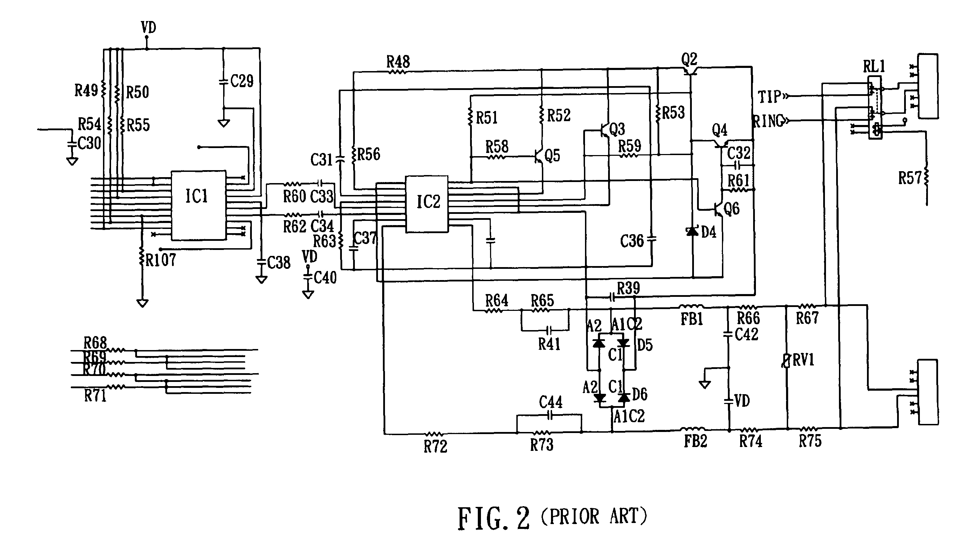

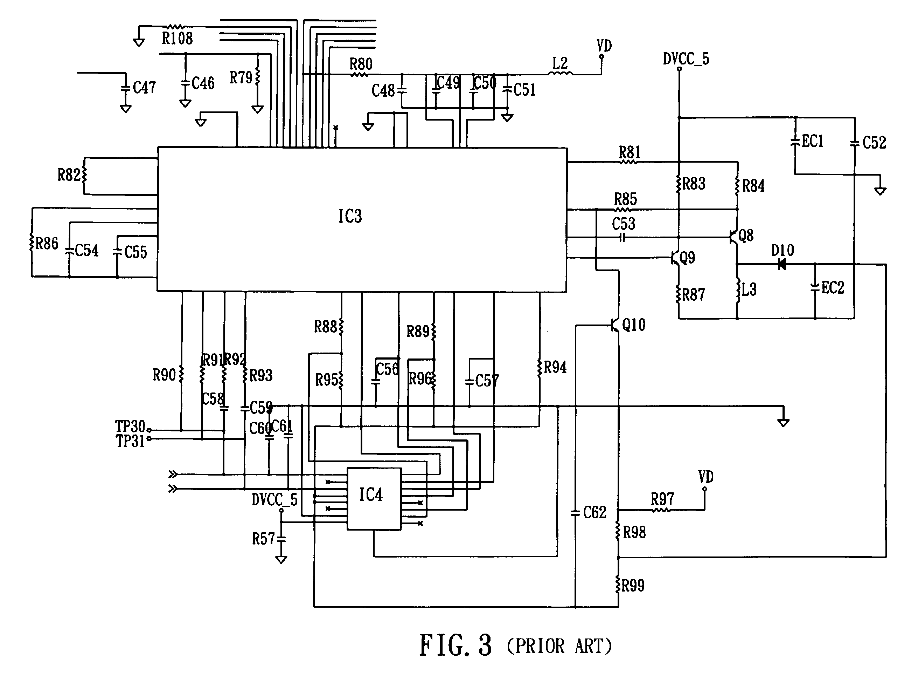

FIG. 2 is a schematic diagram of a typical printed circuit board (PCB) layout for the DAA module 134. FIG. 3 is a schematic diagram of a typical printed circuit board (PCB) layout for the SLIC module 133. As shown in FIGS. 2 and 3, additional electronic devices are implemented on the PCB to cooperate with the SLIC module 133 and the DAA module 134, which results in an excessive area requirement.

Further, referring again to FIG. 1, it is known that the SLIC module 133 and the DAA module 134 have the same functional blocks such as Companding Technology, Codec, PCM & SPI Interface, Hybrid Control, Line Voltage Sense, Line Current Sense, Audio Gain Control, Calibration Control, Two-Wire Impedance Synthesis and TIP/RING Polarity Detection. Accordingly, the repeated functional blocks in the call box device 13 are used inefficiently since the SLIC module 133 and the DAA module 134 do not work at the same time. In addition, the repeated functional blocks waste the PCB area and incur high cost in implementing the additional electronic devices. Therefore, it is desirable to provide an improved device to mitigate and/or obviate the aforementioned problems.

### SUMMARY OF THE INVENTION

An object of the invention is to provide an Internet telephony call box device implemented with a single SLIC module, which can provide a low-cost call box device.

Another object of the invention is to provide an Internet telephony call box device implemented with a single SLIC module, which can use plural additional devices to cooperate with a SLIC module to thereby achieve the functions of the typical SLIC and DAA modules.

Another object of the invention is to provide an Internet telephony call box device implemented with a single SLIC module, which enables a conventional phone to make/answer a regular or VoIP call over the call box device.

Another object of the invention is to provide an Internet telephony call box device implemented with a single SLIC module, which can reduce the PCB size for the call box device.

To achieve the objects, an Internet telephony call box device implemented with a single SLIC module is provided, which is electrically connected with a conventional phone, a personal computer and a public switched telephone network (PSTN). The call box device includes: a first line connector, a second line connector, a switch module, a subscriber line interface circuit (SLIC) module, a line interface (LI) module, a control module and a USB connector. The first line connector is electrically connected to a phone line connected to the conventional phone. The second line connector is electrically connected to a phone line connected to the PSTN. The switch module is electrically connected to the first line connector and the second line connector. The SLIC module is electrically connected to the switch module. The LI module is electrically connected to the switch module. The control module is electrically connected to the switch module, the SLIC module and the LI module. The USB connector is electrically connected to the control module. A connection switching of the first line connector, the second line connector, the SLIC module and the LI module is controlled by the control module and the switch module to accordingly enable the conventional phone to make a call to the PSTN or place a VoIP call over the call box device and the PC.

Other objects, advantages, and novel features of the invention will become more apparent from the following detailed description when taken in conjunction with the accompanying drawings.

### BRIEF DESCRIPTION OF THE DRAWINGS

FIG. 1 is a block diagram of a typical Internet telephony call box device applied to a conventional phone;
FIG. 2 is a schematic diagram of a typical printed circuit board (PCB) layout for a DAA module;
FIG. 3 is a schematic diagram of a typical printed circuit board (PCB) layout for a SLIC module.
FIG. 4 is a block diagram of an Internet telephony call box device implemented with a single SLIC module according to the invention;
FIG. 5 is a schematic diagram of a first embodiment of the invention;
FIG. 6 is a schematic diagram of a second embodiment of the invention;
FIG. 7 is a schematic diagram of a third embodiment of the invention;
FIG. 8 is a schematic diagram of a fourth embodiment of the invention;
FIG. 9 is a schematic diagram of a fifth embodiment of the invention; and
FIG. 10 is a schematic diagram of a sixth embodiment of the invention.

### DETAILED DESCRIPTION OF THE PREFERRED EMBODIMENT

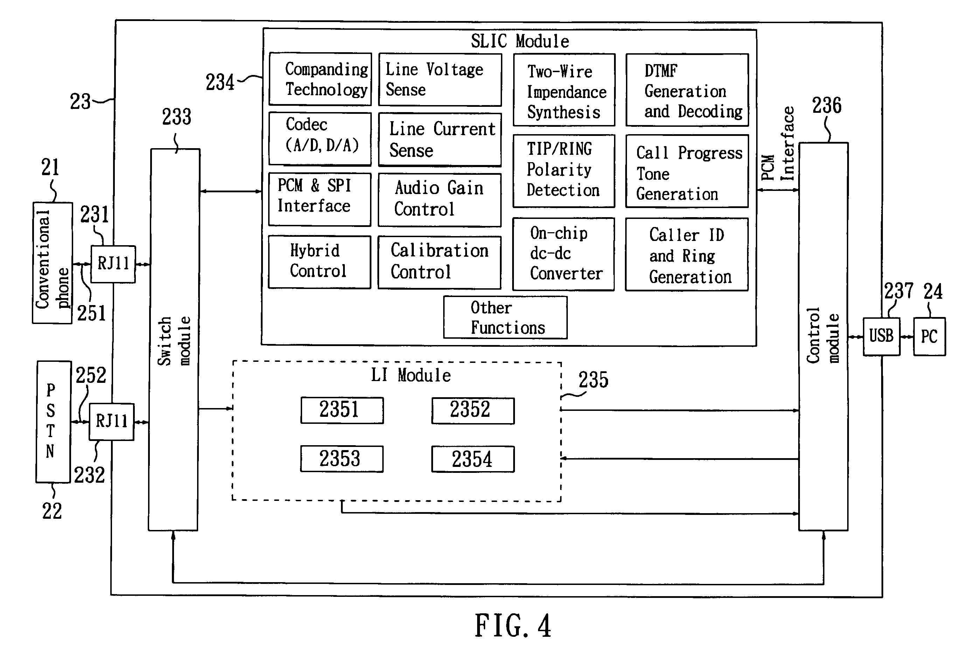

FIG. 4 is a block diagram of an Internet telephony call box device implemented with a single SLIC module according to the invention. As shown in FIG. 4, the system to realize the effect of Internet telephony over the call box device includes a conventional phone 21, the PSTN 22, the call box device 23 and a personal computer (PC) 24. The call box device 23 includes line connectors 231,232, a switch module 233, a SLIC module 234, a line interface (LI) module 235, a control module 236 and a USB connector 237. The LI module 235 includes a protection and rectification unit 2351, a line status monitor unit 2352, a ring detection unit 2353 and an off-hook emulation unit 2354.

The line connector 231 is electrically connected to a phone line 251 connected to the conventional phone 21. The line connector 232 is electrically connected to a phone line 252 connected to the PSTN 22. The call box device 23 is electrically connected with the PC 24 through the USB connector 237. In other embodiments, the call box device 23 can be electrically connected with the PC 24 through another transmission interface such as IEEE 1394. In this embodiment, the PC is connected with the Internet such that the conventional phone 21 can place a VoIP call over the call box device 23 and the PC 24.

In addition, the switch module 233 is electrically connected to the line connectors 231 and 232. The SLIC module 234 and the LI module 235 are electrically connected to the switch module 233. The control module 236 is electrically connected to the SLIC module 234, the LI module 235 and the switch module 233 to thereby control the operations, including transmitting and receiving data.

The switch module 233 switches a connection of the line connectors 231 and 232, the SLIC module 234 and the LI module 235. The SLIC module 234 emulates a central office to thereby provide the functions of feeding power, sensing voltage, transmitting and receiving voice data, ringing, caller ID and call progress tone (CPT). The LI module 235 consists of plural components, which enables the call box device 23 to obtain the functionality of the prior SLIC and DAA modules by cooperating with the SLIC module 234. In addition to controlling the operations of the devices 233 to 235, the control module 236 changes a voice signal into an USB-formatted data.

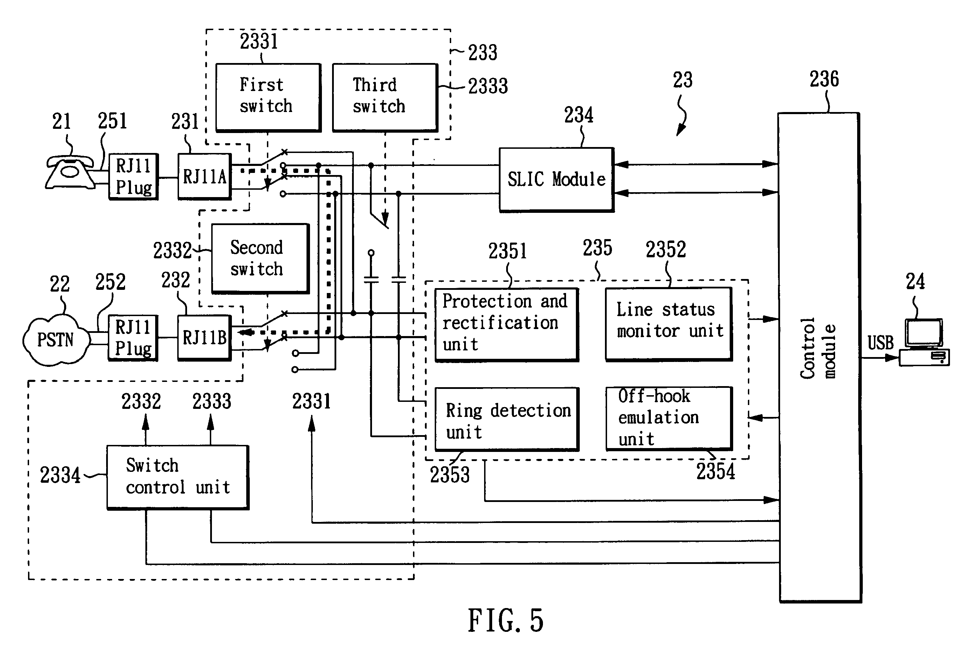

FIG. 5 is a block diagram of internal functions of the call box device 23. In the figure, the switch module 233 includes first, second and third switches 2331-2333, and a switch control unit 2334.

The first switch 2331 switches a connection between the line connector 231 and the line connector 232, LI module 235 or SLIC module 234. The second switch 2332 switches a connection between the line connector 232 and the line connector 231, LI module 235 or SLIC module 234. The third switch 2333 switches a connection between the SLIC module 234 and the LI module 235. The switch control unit 2334 is controlled by the control module 236 to control the switching of the first to third switches 2331-2333.

The protection and rectification unit 2351 protects the devices 2352-2354 to prevent damage from excessive voltage on the phone line 252 connected to the PSTN 22 or a polarity change of the central office voltage. The line status monitor unit 2352 monitors a voltage change on the phone line 252 to accordingly determine if the handset of the conventional phone 21 is off-hook and further sends the result determined to the control module 236. The ring detection unit 2353 detects whether the phone line 252 has a ring signal or not and further sends the result detected to the control module 236. The off-hook emulation unit 2354 emulates the off-hook function. When the control module 236 sends an off-hook emulation setup signal to the off-hook emulation unit 2354, the unit 2354 forms a loop with the phone line 252. In this case, a loading resistance between the tip and ring lines of the phone line 252 is reduced, and further the voltage difference between the tip and lines is reduced. Thus, the off-hook emulation is achieved.

In reference to the functions and connections of the internal devices of the call box device described above, some embodiments are given as follow:

First, a user has to configure the call box device 23 between the conventional phone 21 and the PC 24. Namely, the call box device 23 has three connectors: the line connector 231 connected to the phone line 251, the line connector 232 connected to the phone line 252, and the USB connector 237 connected to a USB transmission line. The phone line 251 is connected to the conventional phone. The phone line 252 is connected to the PSTN. The USB transmission line is connected to the PC 24.

Once the call box device 23 has been configured, the internal devices are initialized through a power provided by the USB transmission line for further operations. Next, the call box device 23 checks whether both the phone line 251 connected to the conventional phone and the phone line 252 connected to the PSTN have the right connection to call box device 23 or not, and proceeds an automatic connection switching mechanism in order to finally ensure the right connection for the phone line 251 connected to the conventional phone and the phone line 252 connected to the PSTN. Next, the call box device 23 enters an idle state to monitor an incoming VoIP or regular (from the PSTN 22) call for the user or an outgoing call, which is made by the user with the conventional phone 21, over the call box device 23 to a called party.

Also, the call box device 23 monitors the voltage status of the phone line 252 connected to the PSTN 22 to determine if the conventional phone 21 is off-hook. Namely, upon the voltage status, the call box device 23 can determine if the user is to use the conventional phone 21 to make a phone call.

For making/answering a regular or VoIP call, the call box device 23 requires separating the following operations, including:
1. using the conventional phone 21 to make a regular call over the call box device 23 to the PSTN 22 (i.e., a Phone to PSTN call);
2. using the conventional phone 21 to place a VoIP call over the call box device 23 and the PC 24 (i.e., a Phone to PC call);
3. using the conventional phone 21 to answer an incoming call from the PSTN 22 over the call box device 23 (i.e., a PSTN to Phone call);
4. using the call box device 23 to forward an incoming call from the PSTN 22 to the PC 24 (i.e., a PSTN to PC call);
5. using the conventional phone 21 to answer a VoIP call over the call box device 23 and the PC 24 (i.e., a PC to Phone call); and
6. using the call box device 23 to forward a VoIP call to the PSTN 22 over the PC 24 (i.e., a PC to PSTN call).

The operations cited above are described in detail as follow.

### Phone to PSTN

This embodiment is shown in FIG. 5 in which a user typically uses the conventional phone 21 to make a regular call to the PSTN 22.

As shown in FIG 5, the operations in the call box device 23 essentially correspond to the switch module 233, the SLIC module 234, the LI module 235 having the protection and rectification unit 2351 and the line status monitor unit 2352, and the control module 236.

In this embodiment, a default state for the first switch 2331 is to connect the line connector 231 with the line connector 232. Namely, at the default state, the line connector 231 is electrically connected with the line connector 232 while the handset of the conventional phone 21 is on-hook. A default state for the second switch 2332 is to connect the line connector 231 with the line connector 232 and to electrically connect the line connector 232 with the LI module 235. A default state for the third switch 2333 is to disconnect the SLIC module 234 from the LI module 235.

Since the first and second switches electrically connect the conventional phone 21 and the PSTN 22, the line status monitor unit 2352 detects a voltage drop on the phone line 252 connected to the PSTN 22 when the handset of the phone 21 is picked up (referred to as off-hook). In this case, the unit 2352 produces an off-hook notification signal to output to the control module 236. Meanwhile, the protection and rectification unit 2351 works to protect all devices in the LI module 235.

Subsequently, the control module 236 controls the switch control unit 2334 to control the third switch 2333 for connecting the SLIC module 234 with the LI module 235 to thereby electrically connect the SLIC module 234 with the line connector 232 through two capacitors. The SLIC module 234 can accordingly detect the dual-tone multi-frequency (DTMF) signals produced when certain keys on the conventional phone 21 are pressed. If the SLIC module 234 does not detect a DTMF signal produced by a "*" key, it indicates that a user desires to make a regular call to the PSTN 22. In this case, the control module 236 controls the third switch 2333 to disconnect the SLIC module 234 from the LI module so that undesired DTMF signals are not detected by the SLIC module 234. Namely, the SLIC module 234 is not operated when the user desires to make a regular call.

As cited, the conventional phone 21 can make a regular call over the call box device to the PSTN 22, and the path passed by the corresponding voice signal is shown by the dotted line in FIG 5.

When the SLIC module 234 detects the DTMF signal produced by the "*" key, it indicates that the user desires to place a VoIP call. In this case, the control module 236 precedes other associated processes described later.

In other embodiments, the DTMF signal produced by the "*" key can be replaced with a DTMF signal produced by a "#" key or a combination of the keys to thereby indicate that the user desires to place a VoIP call.

### Phone to PC

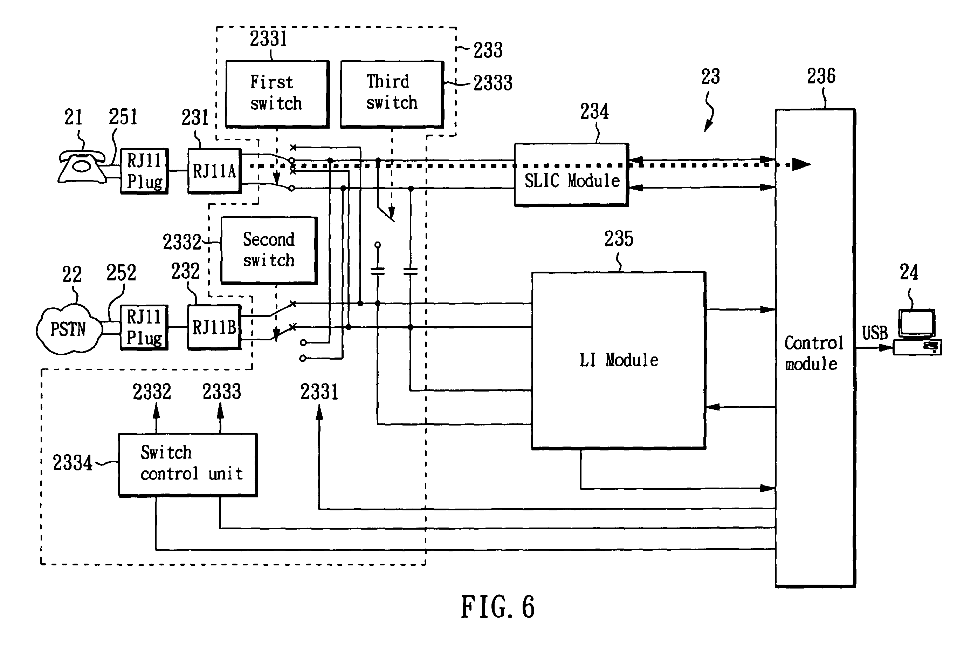

FIG 6 is a schematic diagram of a second embodiment of the invention, which shows a user wants to use the conventional phone 21 to place a VoIP call over the PC 24.

As shown in the figure, the operations in the call box device 23 essentially correspond to the switch module 233, the SLIC module 234 and the control module 236.

In this embodiment, when the handset of the conventional phone 21 is off-hook, the first switch 2331 connects the line connector 231 with the line connector 232, the second switch 2332 connects the line connector 231 with the line connector 232 and connects the line connector 232 with the LI module 235, and the third switch 2333 connects the SLIC module 234 with both the LI module 235 and the line connector 232.

When a user desires to use the conventional phone 21 to place a VoIP call, the user has to press a default key (such as the "*" key) on the phone 21 such that the SLIC module 234 detects the DTMF signal produced by the "*" key and produces a notification signal to the control module 236. Next, the control module 236 controls the first switch 2331 to connect the line connector 231 with the SLIC module 234. Thus, the line connector 231 and the SLIC module 234 are electrically connected. In addition, the control module 236 controls the switch control unit 2334 to maintain the second switch 2332 to electrically connect the line connector 232 with the LI module 235. Further, the control module 236 controls the third switch 2333 to disconnect the SLIC module 234 from the LI module 235 to thereby prevent the SLIC module 234 from incurring interference of the PSTN 22.

As cited, the user can use the conventional phone 21 to place a VoIP call, and the corresponding voice signal is delivered by a path, i.e., conventional phone 21 →line connector 231 →SLIC module 234 →control module 236 →PC 24 →Internet, as shown by the dotted line in FIG 6.

### PSTN to Phone

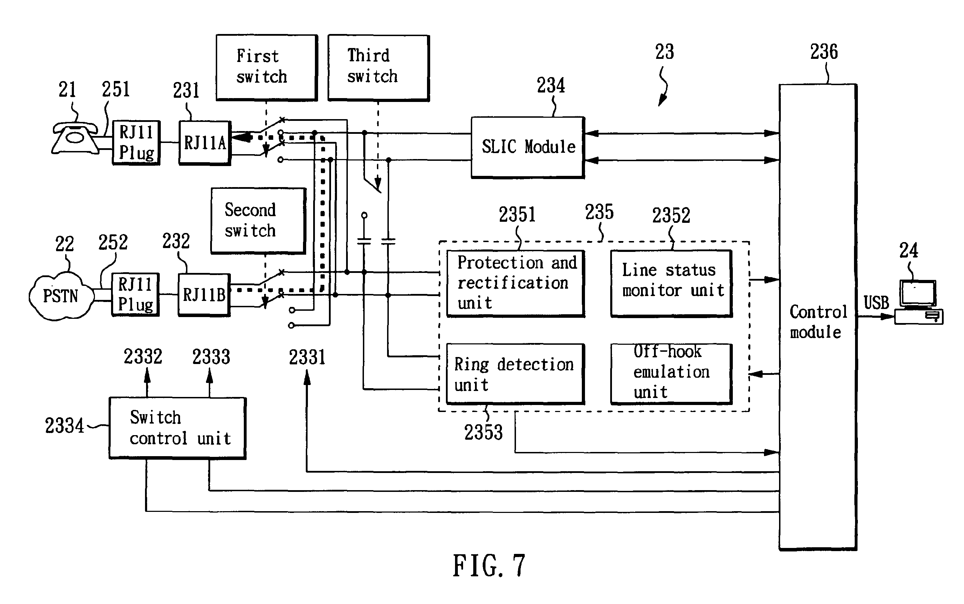

FIG. 7 is a schematic diagram of a third embodiment of the invention, which shows a user wants to use the conventional phone 21 to answer an incoming call from the PSTN 22.

As shown in FIG. 7, the operations in the call box device 23 essentially correspond to the protection and rectification unit 2351, the line status monitor unit 2352, the ring detection unit 2353 and the control module 236.

Typically, the conventional phone 21 and the PSTN 22 are electrically connected. When a calling party on the PSTN 22 dials to the user on the conventional phone 21, the conventional phone 21 rings. At this point, since the LI module 235 is electrically connected with the connectors 231 and 232, the control module 236 uses the ring detection unit 2353 to determine if the call to the conventional phone 21 is answered in a predetermined quantity of ringing tones. The line status monitor unit 2352 accordingly detects the voltage change on the phone line 252 to determine if the handset of the phone 21 is off-hook, and sends the result determined to the control module 236. Meanwhile, the protection and rectification circuit 2351 works to protect the devices in the LI module 235.

In this embodiment, the predetermined quantity of ringing tones is set at eight, but not limited to it, depending on the needs.

If the call to the conventional phone 21 is answered within the eight rings, the corresponding voice signal is delivered by a path, i.e., PSTN 22 →phone line 252 →line connector 232 →line connector 231 →phone line 251 →conventional phone 21, as shown by the dotted line in FIG 7.

If the call to the conventional phone 21 is not answered within the eight rings, the control module 236 forwards the call dialed over the PSTN 22 to the PC 24 in order to use an Internet telephony application program installed in the PC 24 to forward the call to an assigned correspondent in an address book list, which is further described later.

### PSTN to PC

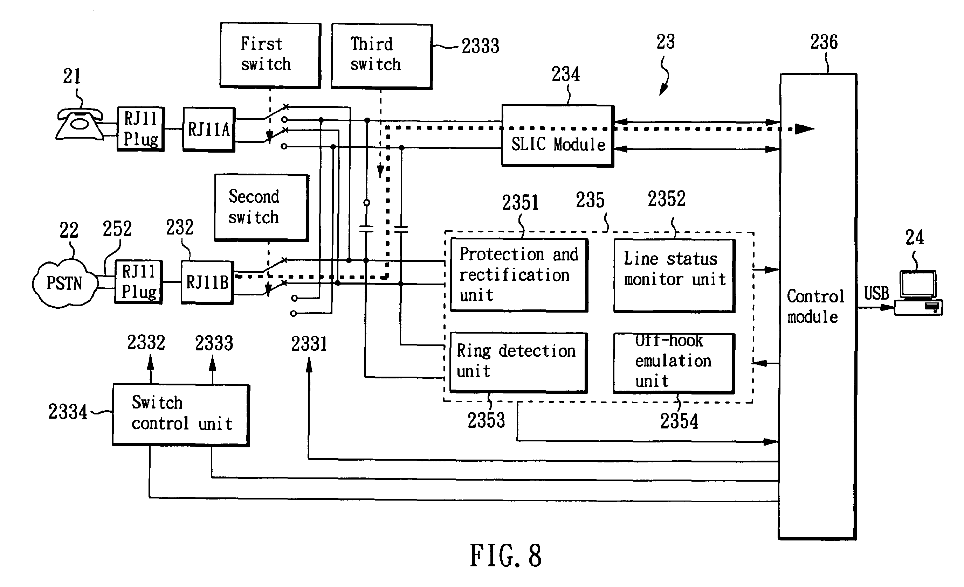

FIG 8 is a schematic diagram of a fourth embodiment of the invention, which shows an incoming call dialed over the PSTN 22 and forwarded to the PC 24.

As shown in the figure, the operations in the call box device 23 essentially correspond to the third switch 2333, the switch control unit 2334, the SLIC module 234, the protection and rectification unit 2351, the line status monitor unit 2352, off-hook emulation unit 2354 and the control module 236.

When a calling party on the PSTN 22 dials to a called party on the conventional phone 21, the ring detection unit 2353 determines if the call to the conventional phone 21 is answered in a predetermined quantity of ringing tones.

If the call to the conventional phone 21 is not answered within the predetermined quantity, the control module 236 controls the switch control unit 2334 to control the third switch 2333 to switch on to thereby electrically connect the line connector 232 with the SLIC module 234 through the capacitors.

The control module 236 controls the off-hook emulation unit 2354 to emulate a call answered action to thereby produce a voltage drop on the phone line 252 connected to the PSTN 22. Accordingly, the call dialed over the PSTN 22 can be forwarded to the PC 24 and received by the Internet telephony application. Next, the Internet telephony application program sends a voice message over the PC 24 and the call box device 23 to the calling party to show the transferable phone numbers in an address book list of the Internet telephony application.

For example, the first number recorded in the address book list may be an IP-phone account used in the office of the called party, and accordingly the calling party can choose to forward the call to the IP-phone account used in the office of the called party or not. The call is forwarded to the IP-phone account used in the office of the called party when the calling party chooses it. In other embodiments, the address book list can include the cellphone number and/or office phone number of the called party, and in this case the voice message also shows the phone numbers.

### PC to Phone

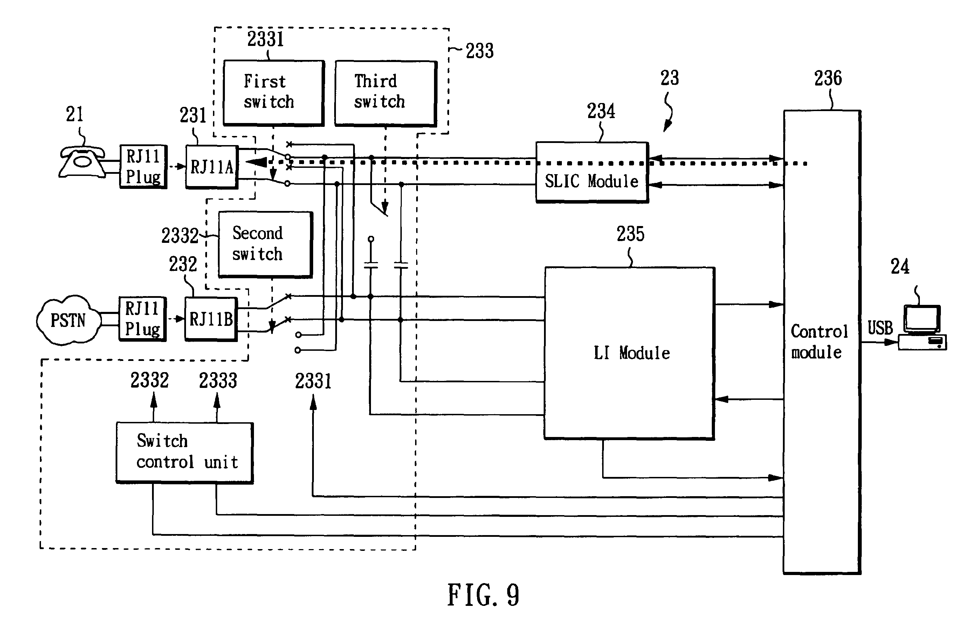

FIG 9 is a schematic diagram of a fifth embodiment of the invention, which shows that a VoIP call is delivered to the conventional phone 21 over the PC 24.

As shown in the figure, the operations in the call box device 23 essentially correspond to the first switch 2331, the SLIC module 234 and the control module 236.

The call box device 23 is connected between the conventional phone 21 and the PC 24 for a voice communication. Namely, the conventional phone 21 is used to place a VoIP call over the call box device 23 and the PC 24, or a VoIP call is delivered to the conventional phone over the call box device 23 and the PC 24, and when the voice communication ends, the automatic connection switching mechanism is proceeded to electrically connect the conventional 21 with the phone line 252 connected to the PSTN 22.

When the call box device 23 is in the idle state, a predetermined state for the first switch 2331 is to connect the line connector 231 with the line connector 232 for an electrical connection.

In this embodiment, when a VoIP call over the Internet is received (such as a received call delivered over the Skype software), the PC 24 sends a notification signal to the control module 236 to thereby control the first switch 2331 to electrically connect the line connector 231 with the SLIC module 234. Thus, the conventional phone 21 and the SLIC module 234 are electrically connected, and the conventional phone 21 can accordingly answer the VoIP call.

As cited, the voice signal corresponding to the VoIP call dialed over the Internet is delivered by a path, i.e., Internet →PC 24→control module 236 →SLIC module 234 →line connector 231 →conventional phone 21, as shown by the dotted line in FIG 9. Thus, the VoIP call on the Internet is delivered to and answered by the conventional phone 21.

### PC to PSTN

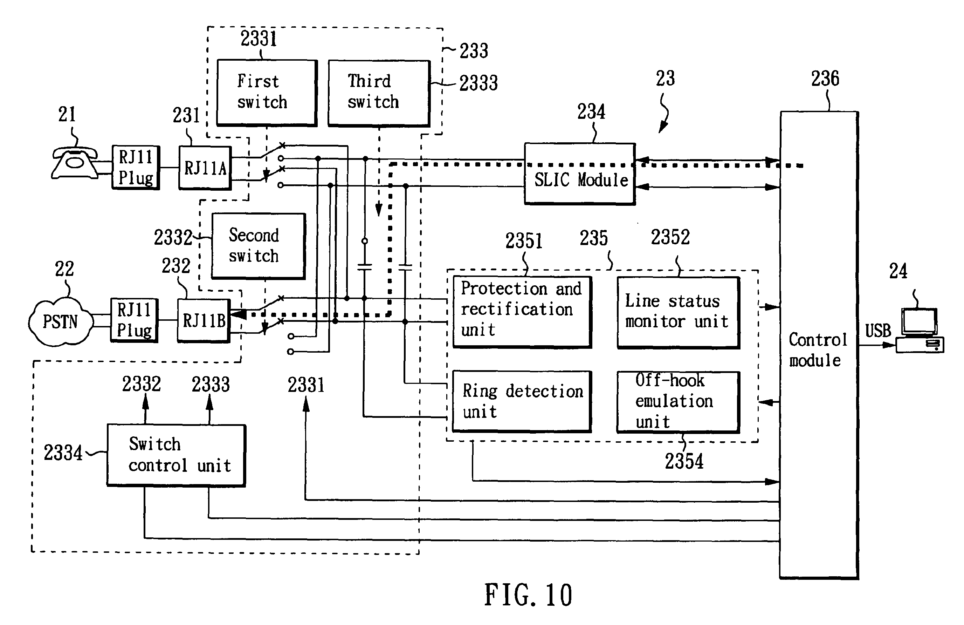

FIG. 10 is a schematic diagram of a sixth embodiment of the invention, which shows that a VoIP call is delivered to the PSTN 22 over the PC 24.

As shown in the figure, the operations in the call box device 23 essentially correspond to the third switch 2333, the switch control unit 2334, the protection and rectification unit 2351, the line status monitor unit 2352, the off-hook emulation unit 2354, the SLIC module 234 and the control module 236.

When a VoIP call is to be delivered to the conventional phone 21 over the PC 24 and the Internet telephony application program installed in the PC 24 has a forward setup function, the first switch 2331 electrically connects the line connector 231 with the line connector 232, and the second switch 2332 electrically connects the line connector 231 with the line connector 232 and also the line connector 232 with the LI module 235.

When a VoIP call is to be delivered to the conventional phone 21, due to the forward setup function provided by the Internet telephony application, the control module 236 uses the switch control unit 2334 to control the third switch 2333 to switch on to thereby electrically connect the SLIC module 234 with the phone line 252 connected to the PSTN 22 through the capacitors.

Because the SLIC module 234 is electrically connected with the phone line 252 through the capacitors, which isolates the SLIC module 234, the central office cannot be aware of a forwarding call is proceeding. At this point, the control module 236 controls the off-hook emulation unit 2354 to emulate off-hook of the handset to thereby produce a voltage drop on the phone line 252. Accordingly, the voice signal corresponding to a VoIP call dialed over the Internet can be delivered to the PSTN 22 through the SLIC 234, the capacitors, the line connector 232 and the phone line 252. In addition, the conventional phone 21 without the forward setup function continuously rings, and the VoIP call is not forwarded to the PSTN 22.

To base on foregoing description, a still another embodiment of the invention discloses an Internet telephony call box method implemented with a single subscriber line interface circuit (SLIC) module, the method comprising the steps of:
electrically connecting a call box device with a conventional phone, a personal computer (PC) and a public switched telephone network (PSTN) respectively, wherein the PC is connected with the Internet, and the call box device comprising a SLIC module and a line interface (LI) module is in an idle state, wherein the conventional phone is electrically connected to the PSTN for making the regular call to the PSTN over the call box device, or answering an incoming call dialed over the PSTN; and
executing the following steps when a handset of the conventional phone is off-hook, the steps comprising:
   detecting whether a predetermined key on the conventional phone to be pressed or not by the SLIC module;
   placing the VoIP call over the call box device and the PC by the conventional phone when the predetermined key is pressed; and
   making the regular call to the PSTN over the call box device by the conventional phone when the predetermined key is not pressed.

When an incoming VoIP call from the Internet is to be delivered to the conventional phone, the conventional phone is electrically connected with the SLIC module for answering an incoming VoIP call from the Internet by the conventional phone. Likewise, when an incoming call dialed over the PSTN is to be delivered to the conventional phone, the conventional phone is electrically connecting with the PSTN for answering an incoming call dialed over the PSTN by the conventional phone.

When an incoming call dialed over the PSTN is to be delivered to the conventional phone, the method further comprising the steps of:
detecting a quantity of ringing tones on the conventional phone by the LI module;
electrically connecting the PSTN with the SLIC module through two capacitors when the quantity of ringing tones exceeds a predetermined number and the incoming call from the PSTN is not answered; and
emulating an off-hook handset on the conventional phone by the LI module for forwarding the incoming call from the PSTN to the PC over the SLIC module.

Furthermore, when an incoming VoIP call is delivered from the Internet, the method further comprising the steps of:
detecting an incoming VoIP call from the Internet; and
electrically connecting the SLIC module with one of the conventional phone and the PSTN according to the incoming VoIP call for delivering a voice signal corresponding to the incoming VoIP call to one of the conventional phone and the PSTN over the PC and the SLIC module.

As cited in the embodiments, the call box device provides the SLIC module and the LI module to achieve the functions of the prior SLIC module and the DAA module. Since the prior DAA module is operated only for the answer and dial functions, many internal functional blocks such as the functions of incoming call detection and parallel handset detection are not used, whereby previous waste of the PCB area for the call box device is avoided.

In addition, the SLIC module and DAA module have many blocks with the same functions, such as companding technology, codec, PCM & SPI interface, hybrid control, line voltage sense, line current sense, audio gain control, calibration control, two-wire impedance synthesis and TIP/RING polarity detection. These functions can be achieved with the SLIC module and thus the DAA module can be simplified so as to reduce the required PCB area and electronic components.

In addition, the invention integrates the functions such as the line status monitor unit, the ring detection unit and the off-hook emulation unit that are originally provided by the DAA module with the protection and rectification unit into the LI module to further reduce the internal PCB size required for the call box device.

Table 1 is a comparative table of the prior and inventive call box devices.

**Table 1**

| | Prior Internet telephony call box device | Inventive Internet telephony call box device |
|---|---|---|
| Proportion of PCB area | 1 | 0.812 |
| Required number of electronic components | Mass | Minor |
| Cost | High | Low |

As shown in the comparison of Table 1, if the PCB area for the prior call box device is one, the inventive call box device is only 0.81 in proportion. In addition, the DAA module in the prior call box device is achieved by the LI module and a few inexpensive discrete elements in the invention. Thus, the inventive call box device costs much less than the prior call box device costs.

Although the present invention has been explained in relation to its preferred embodiment, it is to be understood that many other possible modifications and variations can be made without departing from the spirit and scope of the invention as hereinafter claimed.

## Claims

1. An Internet telephony call box device implemented with a single subscriber line interface circuit (SLIC) module, which is connected with a conventional phone, a personal computer (PC) and a public switched telephone network (PSTN) respectively, the call box device comprising:
a first line connector, which is electrically connected to a phone line connected to the conventional phone;
a second line connector, which is electrically connected to a phone line connected to the PSTN;
an universal serial bus (USB) connector, which is electrically connected to the PC;
a switch module, which is electrically connected to the first line connector and the second line connector respectively;
a SLIC module, which is electrically connected to the switch module;
a line interface (LI) module, which is electrically connected to the switch module; and
a control module, which is electrically connected to the switch module, the SLIC module, the LI module and the USB connector respectively,
wherein the control module controls the switch module to switch a connection of the first line connector, the second line connector, the SLIC module and the LI module, wherein the conventional phone makes a regular call to the PSTN by electrically connecting the first line connector and the second line connector, and or places a VoIP call over the call box device and the PC by electrically connecting the first line connector and the SLIC module through two capacitors.

2. The call box device as claimed in claim 1, wherein the control module controls the switch module to change a connection of the first line connector, the second line connector, the SLIC module and the LI module to electrically connect the first line connector and the SLIC module for answering an incoming VoIP call from the Internet by the conventional phone.

3. The call box device as claimed in claim 1, wherein the control module controls the switch module to change a connection of the first line connector, the second line connector, the SLIC module and the LI module to electrically connect the first line connector and the second line connector for answering an incoming call dialed over the PSTN by the conventional phone.

4. The call box device as claimed in claim 1, wherein the call box device electrically connected with the conventional phone, the PC and the PSTN is in an idle state, and the conventional phone is enabled to make the regular call to the PSTN when the first line connector and the second line connector are electrically connected.

5. The call box device as claimed in claim 1, wherein the SLIC module detects a predetermined key on the conventional phone to be pressed or not when a handset of the conventional phone is off-hook, wherein the conventional phone places the VoIP call over the call box device and the PC when the predetermined key is pressed, and the conventional phone makes the regular call to the PSTN over the call box device when the predetermined key is not pressed.

6. The call box device as claimed in claim 1, wherein the control module controls the switch module to electrically connect the first line connector with the SLIC module when the conventional phone places the VoIP call over the call box device and the PC.

7. The call box device as claimed in claim 1, wherein the LI module comprises a protection and rectification unit, a line status monitor unit, a ring detection unit and an off-hook emulation unit.

8. The call box device as claimed in claim 7, wherein the control module uses the ring detection unit to detect a quantity of ringing tones on the conventional phone when an incoming call from the PSTN is to be delivered to the conventional phone and controls the switch module to electrically connect the second line connector with the SLIC module through the capacitors when the quantity of ringing tones exceeds a predetermined number and the incoming call from the PSTN is not answered, and the off-hook emulation unit is activated to emulate an off-hook handset on the conventional phone such that the incoming call from the PSTN is forwarded to the PC over the SLIC module.

9. The call box device as claimed in claim 7, wherein the conventional phone is enabled to answer an incoming call from the PSTN as a handset of the conventional phone is picked up in a predetermined quantity of ringing tones when the call box device in an idle state enables the first line connector to electrically connect with the second line connector.

10. The call box device as claimed in claim 1, wherein the control module controls the switch module to electrically connect the first line connector with the SLIC module when an incoming VoIP call is to be delivered to the conventional phone, and accordingly a voice signal corresponding to the incoming VoIP call is delivered to the conventional phone over the PC and the SLIC module.

11. The call box device as claimed in claim 1, wherein the control module controls the switch module to electrically connect the SLIC module with the second line connector through the capacitors as an Internet telephony application program installed in the PC and applied with the call box device has a forward setup function when an incoming VoIP call is to be delivered to the conventional phone, and accordingly a voice signal corresponding to the incoming VoIP call is delivered to the PSTN over the PC and the SLIC module.

12. An Internet telephony call box method implemented with a single subscriber line interface circuit (SLIC) module, the method comprising the steps of:
electrically connecting a call box device with a conventional phone, a personal computer (PC) and a public switched telephone network (PSTN) respectively, wherein the call box device comprises a SLIC module and a line interface (LI) module, and the PC is connected with the Internet; and
executing the following steps when a handset of the conventional phone is off-hook, the steps comprising:
detecting whether a predetermined key on the conventional phone to be pressed or not by the SLIC module;
placing the VoIP call over the call box device and the PC by the conventional phone when the predetermined key is pressed; and
making the regular call to the PSTN over the call box device by the conventional phone when the predetermined key is not pressed.

13. The call box method as claimed in claim 12, wherein the call box device is in an idle state, wherein the conventional phone is electrically connected to the PSTN for making the regular call to the PSTN over the call box device, or answering an incoming call dialed over the PSTN.

14. The call box method as claimed in claim 12, further comprising the steps of:
electrically connecting the conventional phone and the SLIC module for answering an incoming VoIP call from the Internet by the conventional phone when an incoming VoIP call from the Internet is to be delivered to the conventional phone; and
electrically connecting the conventional phone and the PSTN for answering an incoming call dialed over the PSTN by the conventional phone when an incoming call dialed over the PSTN is to be delivered to the conventional phone.

15. The call box method as claimed in claim 12, further comprising the steps of:
executing the following steps when an incoming call dialed over the PSTN is to be delivered to the conventional phone, the steps comprising:
detecting a quantity of ringing tones on the conventional phone by the LI module;
electrically connecting the PSTN with the SLIC module through two capacitors when the quantity of ringing tones exceeds a predetermined number and the incoming call from the PSTN is not answered; and
emulating an off-hook handset on the conventional phone by the LI module for forwarding the incoming call from the PSTN to the PC over the SLIC module.

16. The call box method as claimed in claim 12, further comprising the steps of:
detecting an incoming VoIP call from the Internet; and
electrically connecting the SLIC module with one of the conventional phone and the PSTN according to the incoming VoIP call for delivering a voice signal corresponding to the incoming VoIP call to one of the conventional phone and the PSTN over the PC and the SLIC module, wherein the SLIC module is electrically connected to the conventional phone for answering the incoming VoIP call, or the SLIC module is electrically connected to the PSTN through the capacitors for forwarding the incoming VoIP call.

17. An Internet telephony call box method implemented with a single subscriber line interface circuit (SLIC) module, the method comprising the steps of:
electrically connecting a call box device with a conventional phone, a personal computer (PC) and a public switched telephone network (PSTN) respectively, wherein the call box device comprises a SLIC module and a line interface (LI) module, and the PC is connected with the Internet; and
executing the following steps when an incoming call dialed over the PSTN is to be delivered to the conventional phone, the steps comprising:
detecting a quantity of ringing tones on the conventional phone by the LI module;
electrically connecting the PSTN with the SLIC module through two capacitors when the quantity of ringing tones exceeds a predetermined number and the incoming call from the PSTN is not answered; and
emulating an off-hook handset on the conventional phone by the LI module for forwarding the incoming call from the PSTN to the PC over the SLIC module.

18. The call box method as claimed in claim 17, further comprising the steps of:
detecting an incoming VoIP call from the Internet; and
electrically connecting the SLIC module with one of the conventional phone and the PSTN according to the incoming VoIP call for delivering a voice signal corresponding to the incoming VoIP call to one of the conventional phone and the PSTN over the PC and the SLIC module, wherein the SLIC module is electrically connected to the conventional phone for answering the incoming VoIP call, or the SLIC module is electrically connected to the PSTN through the capacitors for forwarding the incoming VoIP call.
